# EUROPEAN PATENT APPLICATION

(11) **EP 1 001 426 A2**
(43) Date of publication of application: **17.05.2000**
(21) Application number: 99120653.3
(22) Date of filing: 19.10.1999
(51) Int. Cl.: G11B 33/04, G11B 23/023

(54) **Modular container for the storage of magnetic data recording media**

(30) Priority: 11.11.1998 IT PN980054 U
(71) Applicant: Exponent Italia S.r.l., 33028 Tolmezzo (Udine) (IT)
(72) Inventor: D Agaro, Amos, 33020 Rigolato, Udine (IT); Marino, Adriano, 28020 Piedimulera, Verbania (IT); Venturini, Andrea, 33013 Gemona, Udine (IT)
(74) Representative: Giugni, Valter

(57) **Abstract**

Modular container for storing magnetic data recording media, such as compact discs or cassettes.

The container holds a first type of module (15) and a second type of module (16) that are both profiled internally so as to show mutually opposing vertical ribs (17, 19) enabling said media to be inserted therein in a staggered arrangement, thereby allowing for greater convenience and ease in practical use.

## Description

The present invention refers to a modular container for the storage of magnetic data recording media as usually employed in a computer, such as compact discs (or CD-ROMs) and cassettes of the type named ZIP IOMEGA.

A number of types of differently shaped and composable containers, adapted to enable the above cited magnetic recording media to be orderly filed therein, are known in the art since a long time now.

The patent specification EP-A-0 836 193 to the same Applicant discloses a modular container of the above cited kind, which is formed by a parallelepiped casing and has a face that is partially closed by a lid that tilts open and retracts to disappear into the same casing. Under the lid there are arranged the front panel and the grip of a sliding drawer that is provided with at least two alternate arrays of receptacles adapted to accomodate a plurality of types of magnetic recording media at the same time. The container described in the above cited patent, although quite practical, is however impaired by a reduced capacity per individual unit. Moreover, the introduction of discs and cassettes in an alternate position in said sliding drawer, further to making it much more complicated to mould or anyway fabricate the bottom of the same drawer, does not prove to be particularly convenient in use

It therefore is a purpose of the present invention to provide a modular container for the storage of magnetic recording media of different types, such as compact discs and ZIP IOMEGA cassettes, in a manner that not only is more rational, but also proves to be more convenient in practical use.

In particular, the container according to the present invention enables the various types of magnetic recording media to be stored in homogeneous clusters that are duly separated from each other. Furthermore, the magnetic recording media of each such cluster are accomodated in individual removable module, in which the media are placed in a staggered arrangement so as to make it more easy for them to be introduced and removed.

The features and advantages of the present invention will anyway be more clearly and readily understood from the description that is given below by way of non-limiting example with reference to the accompanying drawings, in which:
- Figure 1 is a perspective view of a container according to the present invention, in a closed state;
- Figure 2 is a perspective view of the container illustrated in Figure 1, in an open state;
- Figures 3 to 5 are perspective views of three component parts of the container illustrated in Figure 1;
- Figure 6 is a perspective view of a portion of the container illustrated in Figure 1, pulled out of the same container: and
- Figure 7 is a perspective view of a modular composition of several containers according to the present invention.

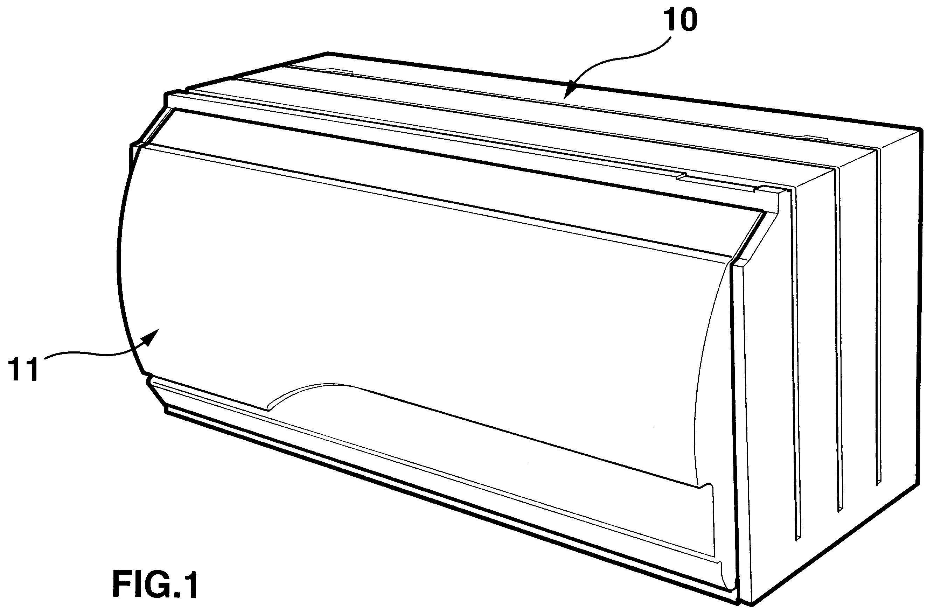

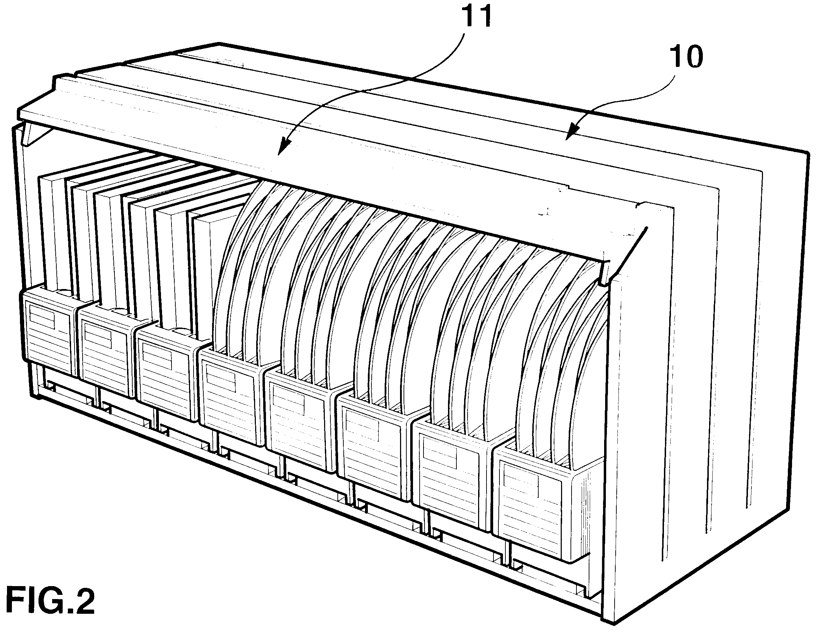

As illustrated in Figures 1 and 2, the modular container for the storage of magnetic recording media according to the present invention is formed by a box-like, substantially parallelepiped case 10 that is provided with a front aperture adapted to be closed preferably by means of a tilting lid 11 of the type that slides into disappearing when opened. As an alternative option, however, said lid 11 may be hinged to an edge of said aperture of the container so as to open outwards with respect to the same container. The case 10 comprises a rear wall, two side walls and an upper wall, which are moulded in a single piece of plastic material.

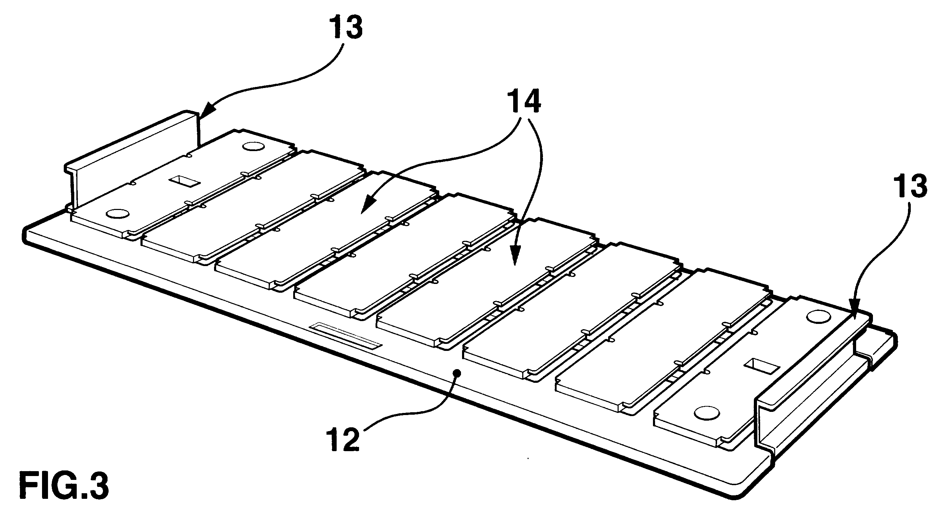

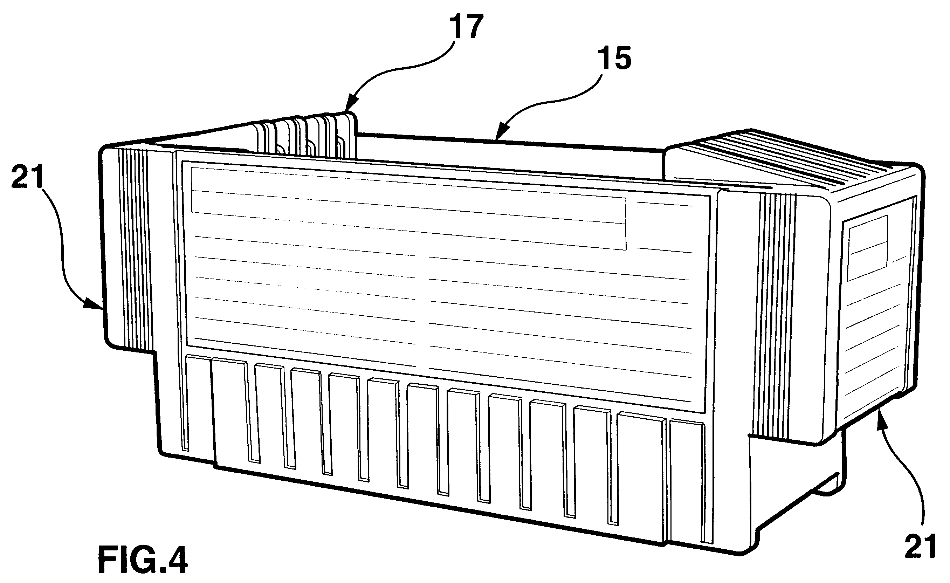

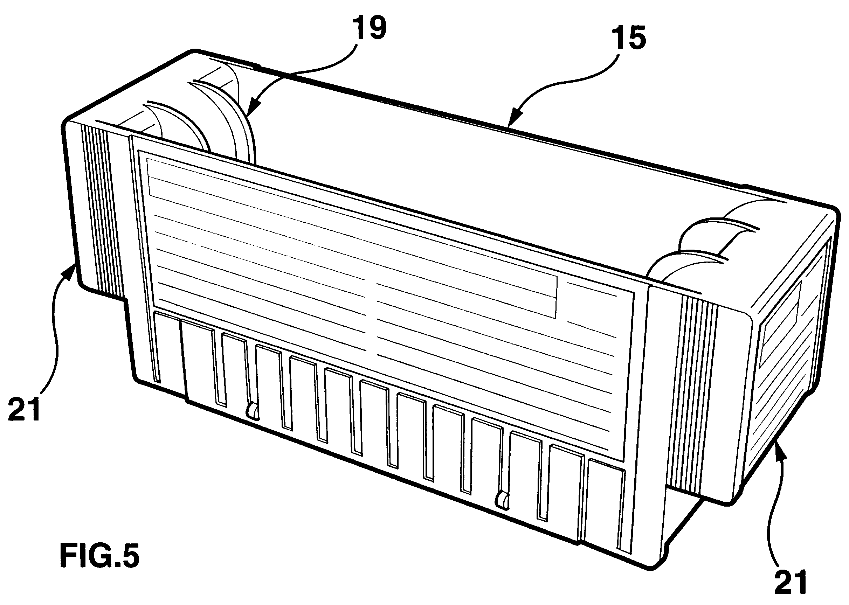

The bottom 12, or base, of the case 10 is preferably separated and, as illustrated in Figure 3, is provided with two lateral raised edges 13 that are adapted to snap into joining with the side walls of the case 10. Said raised edges 13 are preferably made integral with the bottom 12, but can of course be also made separately therefrom and be then joined to the same bottom in removable manner, for instance by snap-fitting or similar means taking advantage from the elasticity of the plastic material. The bottom 12 is furthermore provided with a series of shaped reliefs 14, each one of which is adapted to engage the correspondingly slotted base of a series of drawer-like modules 15, 16 that can be best seen in the illustrations appearing in Figures 4 and 5.

The modules 15 are profiled internally to show mutually opposing vertical ribs 17 which are spaced from each other so as to build appropriate receptacles enabling magnetic data recording media 18 of the compact-disc type to be inserted therein in a vertical position. Said receptacles have alternatingly a greater or smaller depth, so that contiguous discs can be arranged there in a both vertically and transversally staggered manner with respect to each other, in view of enabling them to be more easily and conveniently removed therefrom.

Similarly, the modules 16 are profiled internally to show mutually opposing vertical ribs 19 that are spaced from each other so as to form appropriate receptacles enabling magnetic data recording media 20 of the cassette type to be inserted there in a vertical position. Said receptacles are provided in a transversally staggered arrangement, so that contiguous cassettes can be accomodated there in a correspondingly staggered arrangement in view of making it easier and more convenient to remove them therefrom.

The drawer-like modules 15 and 16 are suitably provided with side gripping means 21 (Figures 4 and 5) ensuring a firm, sure grip thereof when handling them.

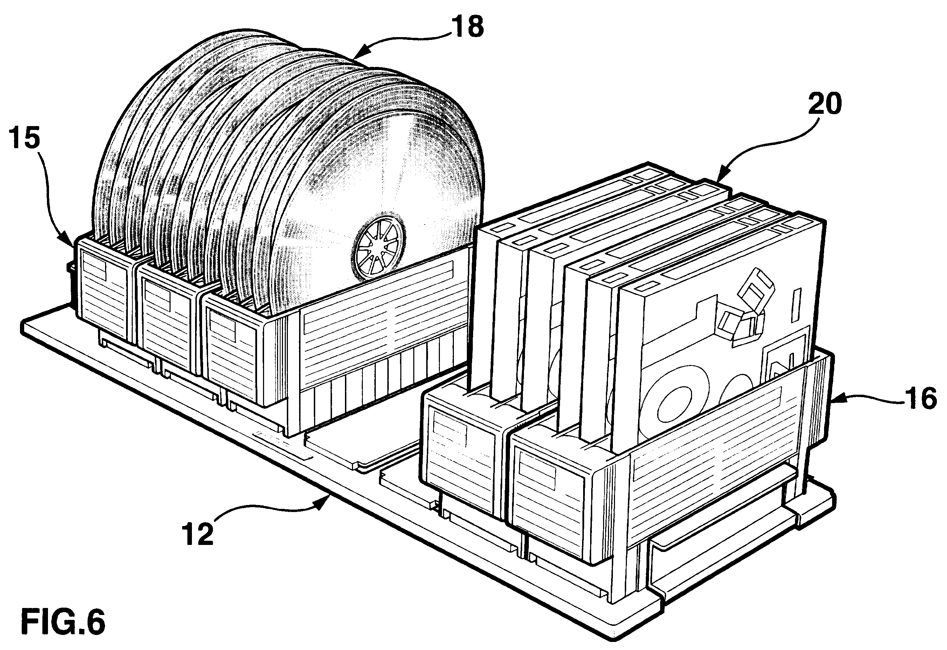

Figure 6 clearly illustrates the bottom 12, as removed from the container, on which a series of drawer-like modules 15, 16 holding discs 18 and cassettes 20, respectively, are inserted.

The advantages of the container according to the present invention can in this way be clearly noticed. In the first place, the differentiated modules 15 and 16 allow for discs and cassettes to be stored separately in appropriately grouped-together arrangements. In the second place, thge discs 18 and the cassettes 20 are accomodated in a staggered arrangement for greater convenience and ease in handling them. Finally, the particular conformation of the base 12 and the removability thereof from the case of the container enable the modules to be both pulled out individually and exposed all together at the same time.

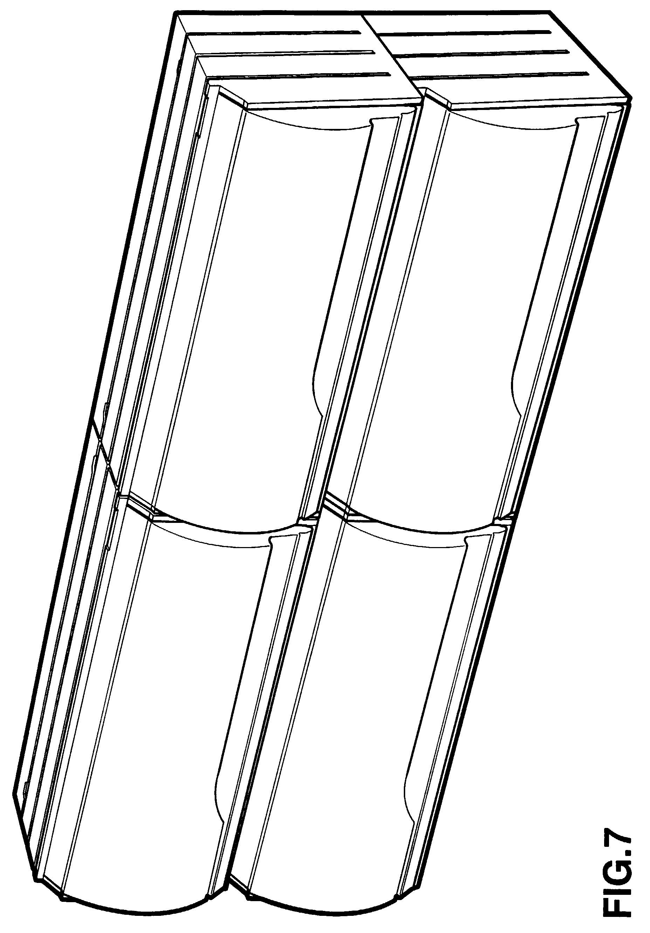

Figure 7 also illustrates a plurality of containers that are associated to each other so as to form a multiple archive or filing facility that may develop both horizontally and vertically. The containers can be connected to each other in any appropriate manner, for instance by snap-fitting through the provision on the walls thereof of elastic tabs and respective receptacles for a mutual engagement.

It will of course be appreciated that the described container may be the subject of any of a number of further improvements and modifications without departing from the scope of the present invention. So, for instance, the modules 15 and 16 can be provided on at least one of their outer walls with label supporting means enabling an indication of the contents of the discs or cassettes inserted in the respective module to be appropriately applied. Furthermore, the base 12 may be provided on its lower surface with appropriate resting means, such as pads or similar means of soft plastic material, to dampen shocks and avoiding friction against the surface on which it rests.

## Claims

1. Modular container for storing magnetic data recording media, such as discs or cassettes, comprising a substantially parallelepiped box-like case (10) provided with a front aperture capable of being closed by means of a lid (11), and a plurality of drawer-like modules (15, 16), **characterized in that**
- a first type of module (15) is profiled internally so as to show mutually opposing vertical ribs (17) that are spaced from each other so as to form appropriate receptacles enabling discs (18) to be inserted therein in a vertically and/or transversally staggered arrangement, and
- a second type of module (16) is profiled internally to show mutually opposing vertical ribs (19) that are spaced from each other so as to form appropriate receptacles for cassettes (20) to be inserted therein in a transversally staggered arrangement.

2. Modular container for the storage of magnetic data recording media according to claim 1, **characterized in that** said box-like case (10) is provided with a removable bottom or base (12) that is formed to show a series of shaped profiles (14), each one of which is adapted to engage the correspondingly slotted base of the modules (15, 16).

3. Modular container for the storage of magnetic data recording media according to claim 1, **characterized in that** said base (12) is provided with two lateral raised edges (13) that are adapted to snap-fit into joining with the side walls of the case (10).
